# EUROPEAN PATENT APPLICATION

(11) **EP 3 819 117 A1**
(43) Date of publication of application: **12.05.2021**
(21) Application number: 20206596.7
(22) Date of filing: 10.11.2020
(51) Int. Cl.: B32B 5/20, B32B 25/04, B32B 25/14, B32B 27/06, B32B 3/06

(54) **FALL PROTECTION**

(30) Priority: 11.11.2019 EP 19208328
(71) Applicant: Turfs Konstgräs i Sverige AB, 115 36 Stockholm (SE)
(72) Inventor: HERMELIN, Gustav Adolf Robert, 115 36 STOCKHOLM (SE)
(74) Representative: Groth & Co. KB

(57) **Abstract**

The present invention relates to a fall protection tile for playgrounds consisting of
i) an upper layer of granulated rubber selected from non-aromatic thermoset elastomers, non-aromatic thermoplastic elastomers, cork, or combinations thereof, said upper layer having a thickness ranging from 5 to 75 mm
ii) a lower layer of a crosslinked foamed polyolefin layer, said lower layer having a thickness ranging from 30 to 150 mm
wherein the upper and lower layers being joined, and wherein the thickness ratio of i) to ii) ranges from 0.03 to 2.5.

The invention also relates to a structure and an arrangement comprising such a fall protection tile as well as a method of manufacturing such tile.

## Description

The present invention relates to a fall protection tile, a fall protection structure comprising a plurality of tiles, and a fall protection arrangement comprising the fall protection structure and a frame surrounding the peripheral tiles of the structure. The invention also relates to a method of manufacturing such a fall protection tile. The invention also relates to the use of such structure and arrangement in playgrounds, in particular playgrounds for children.

### Background of the invention

Fall protections in playgrounds are commonly known in the art. However, many shock-absorbing materials frequently employed today involve hazardous materials such as SBR (styrene butadiene) rubber or other hazardous recycled rubber materials from e.g. tyres. As such materials are exposed to shearing forces as children move over a playground area, they may come loose and ultimately get into contact with playing children which even may put pieces of material in their mouths. Small particles of such material may also drain into the sewage system.

It would therefore be desirable to replace such materials with non-hazardous more environmentally adapted alternatives which provide sufficient fall protection as well as other advantageous properties such as abrasion and wear resistance. Moreover, preparation of fall protection structures has hitherto, at least to a large extent, been made in-situ, i.e. at the site of the actual playground. Needless to say, varying weather conditions, i.e. changes in temperature, humidity and rain may render such preparation slow and the produced protection structure may suffer from irregular properties, such as varying adhesiveness between layers making up the structure, impaired shock absorbance as well as impaired abrasion and wear resistance. Manually prepared playground layers may also result in thickness variation of layers which also contribute to non-uniform shock absorbance properties. Manual preparation on site is also undesired with respect to working conditions involving manual handling of chemicals such as glues, hazardous rubber species etc.

It is thus an object of the present invention to provide a fall protection structure with uniform shock absorbing properties, in particular which protects falls of at least 2 meters or at least 3 meters. It is a further object to provide a more environmentally adapted fall protection structure for use in playground areas for children which also allows accessibility of e.g. wheelchairs.

Yet a further intention of the invention is to impart a high shear resistance to the fall protection structure such that the layers thereof, granules or other particles do not come loose easily as, for example, children slide over the surface of the protection structure. This includes the surface of the layer directly exposed to playing children and material at the contact surface between the layers making up the fall protection structure which likewise may be exposed to shearing forces. As intermediate surfaces are exposed to shearing forces, the layers making up the protection structure may separate partly or entirely. An objective of the present invention is thus to solve the drawbacks referred to hereabove. A further objective of the invention is to provide a protection structure which can be moved from one area to another, for example to/from temporarily mounted playground areas without destructing the tiles making up the fall protection structure. A further objective is to enable replacement of damaged tiles without affecting the surrounding tiles or the tile which is removed without being deformed and/or destructed. The invention also allows for repositioning of repaired tiles in the protection structure.

A further objective of the invention is to enable repairing and maintenance of tiles without handling of harmful chemicals on the playground site. A further objective of the invention is to enable removal of tiles using very limited man-hours.

### The invention

The present invention relates to a fall protection tile for playgrounds consisting of
i) an upper layer of granulated rubber selected from non-aromatic thermoset elastomers, non-aromatic thermoplastic elastomers, cork, or combinations thereof, said upper layer having a thickness ranging from 5 to 75 mm
ii) a lower layer of a crosslinked foamed polyolefin layer, said lower layer having a thickness ranging from 30 to 150 mm
wherein the upper and lower layers are joined to form a layered protection tile, and wherein the thickness ratio of i) to ii) ranges from 0.03 to 2.5.

According to one embodiment, the upper layer is free from aromatic compounds such as aromatic accelerators such as N-tert-butyl-2-benzothiazyl sulfenamide (TBBS) which may be used e.g. when producing the respective layers and/or when joining the layers to one another.

According to one embodiment, when joining the upper and lower layers of individual tiles, the selected desired dimensions of the respective tiles are provided and the desired dimensions thereof are measured at a temperature in the range of 10 to 30 °C, preferably at 20 °C. Such layers of tiles may for example be produced from layers of larger dimensions which subsequently are divided and fitted together at 20 °C to ensure internal tensions do not arise. Also, as the temperature for use typically is from 0 to 40 °C, limited tensions arise as the temperature deviate merely at most up to about 20 °C from the desired production temperature of about 20 °C.

According to one embodiment, the joint between the upper and lower layers resists a shear force of at least 10, preferably at least 50 or at least 100, such as at least 200, at least 300, at least 400, and most preferably at least 500 N during 60 seconds without deformation. For example, the joint may resist forces up to about 600 N during 60 seconds without deformation. To determine shear forces, the standard method ISO 4587:2003 was used.

According to one embodiment, the lower layer is composed of a plurality of laminated individual layers. Preferably, such individual layers have a thickness ranging from about 4 to 40 mm. Such individual layers are preferably joined together by means of heat lamination to form a lower layer having dimensions including thickness as further described herein. As an example, the number of individual layers making up the lower layer may be e.g. 4 to 10, for example 4 to 6. According to one embodiment, the lower layer has a sandwich structure composed of a plurality of layers joined together of the same material. It has been found such sandwich structure imparts enhanced properties with respect to bending, damping and shearing forces exposed on the tile. Also, the dimensional stability of the tile is improved if the lower layer consists of a plurality of laminated layers of the same material as opposed to one single layer.

Preferably, a hot melt adhesive is used as glue to join the upper and lower layers.

A hot melt adhesive provides several advantages over organic solvent-based adhesives since for example volatile organic compounds are reduced or eliminated.

According to one embodiment, the thickness ratio ranges from 0.05 to 0.5, more preferably from 0.1 to 0.4, and most preferably from 0.2 to 0.3.

According to one embodiment, the thickness of the lower layer is from 30 to 90, preferably from 35 to 70, more preferably from 40 to 60 mm.

According to one embodiment, the thickness of the upper layer is from 5 to 40, preferably from 5 to 20, more preferably from 5 to 15 mm.

According to one embodiment, the granulated rubber is based on ethylene propylene diene monomer (EPDM).

According to one embodiment, the polyolefin layer is a polyethylene layer. According to one embodiment, the upper layer is prepared by moulding granulated rubber admixed with an adhesive.

According to one embodiment, the tile has a substantially rectangular or square shape having sides ranging from 200 to 1500 mm, for example 400 to 600 mm. By the term "substantially" is meant the lower layer while having blanks and/or tabs enabling interlocking between the lower layers of adjacent tiles have a substantially rectangular or square shape with the same dimensions as the upper layer despite the fact it has e.g. tabs and/or blanks. The interlocking of the tiles consisting of the lower and upper layers is thus obtained by interlocking merely of the lower layers of the tiles.

According to one embodiment, the density of the lower layer ranges from 20 to 220 kg/m³, such as from 40 to 100 kg/m³, preferably from 55 to 76 kg/m³, or most preferably from 60 to 70 kg/m³. To determine the density, the standard method ASTM D792 was employed.

According to one embodiment, the lower layer ii) is provided with parallel and perpendicular slits at least about 20 mm from any edges thereof.

According to one embodiment, the length of the slits ranges from 40 to 200 mm and the width of the slits ranges from 2 to 6 mm.

The invention further relates to a method of joining the upper layer i) and the lower layer ii) by applying an adhesive to at least one contact surface of i) or ii), wherein the adhesive is applied to e.g. the peripheral portions of at least one of the contacting surfaces; and wherein the layers are pressed together for a time ranging from 1 to 240 seconds at a pressure ranging from 20 to 1000 kPa such as from 100 to 600 kPa and at a temperature ranging from 10 to 35 °C such as 15 to 35 °C, preferably at 15 to 25 °C or 18 to 25 °C such as at 20 °C. Preferably, the entire method of producing the tiles is performed at 10 to 30°C such as about 18 to 22 °C. It has been found that during these process conditions, the formed protection structure after mounting it on the ground and exposed to e.g. playing children remains substantially resistant at temperatures ranging from 0 to 40 °C. The invention further relates to a fall protection structure comprising a plurality of tiles. According to one embodiment, the tiles have lower layers which are
i) shaped to mechanically lock adjacent lower layers of tiles thereby preventing adjacent tiles to move independently; or
ii) mechanically fixated to adjacent tiles by means of fixing elements, for example horizontal pins connecting adjacent tiles.

Preferably, the lower layer of the tile is shaped to mechanically lock adjacent lower layers of tiles thereby preventing adjacent tiles to move independently. Such mechanical interlocking is preferably enabled by means of blanks and/or tabs interlocking adjacent tiles. It has been found in particular that if only the lower layers of the tiles have this interlocking structure, the upper layers need not to have such blanks/tabs thus reducing both production and material costs. Also, it has been found the upper layer show improvements with respect to wearing as it has less joints. Also, the design of the upper layer will show an improved appearance.

The invention also relates to a fall protection arrangement comprising a frame surrounding the peripheral tiles of the fall protection structure as described herein. Such frame mechanically holds the tiles together and may have a height corresponding to the thickness of the lower layer, or the thickness of the lower layer and partially or entirely the thickness of the upper layer.

According to one embodiment, the fall protection structure or arrangement comprises a layer iii) for draining water joined to the lower layer ii) arrangement. The invention also relates to the use of the fall protection structure or arrangement for playgrounds as further described herein.

According to one embodiment, the density of the upper layer ranges from 450 to 800 kg/m³, for example 550 to 700 kg/m³.

The term "polyolefin" as used herein is meant to include any polyolefin such as polyethylene, polypropylene or any other alkene of which polyethylene is the most preferred.

According to one embodiment, the water absorption of the crosslinked polyolefin such as crosslinked polyethylene is below 10 such as from 1 to 10, preferably below 5, and most preferably below 3 volume% (according to ISO 2896). According to one embodiment, the tensile strength of the polyolefin, lengthwise and/or cross wise, is at least 150, for example at least 350, for example at least 380, or at least 450 kPa (as measured by ASTM D3575). The tensile strength of the polyolefin may be up to about 500 kPa, or up to about 1000 kPa or up to 2000 kPa. According to one embodiment, the elongation of the polyolefin, crosswise and/or lengthwise is at least 30%, for example at least 50%, such as at least 150%, for example at least 200% as measured by ASTM D3575. Preferably, the elongation may be up to 300%.

According to one embodiment, the thermal stability of at least the lower layer ranges from 0.1 to 10 %, preferably from 0.1 to 4 % within the temperature range from 0 to 50 °C (as measured by EN 13746:2005).

According to one embodiment, the ratio of the coefficient of thermal expansion of the material of the lower layer to the upper layer ranges from 0.5 to 2, preferably from 0.9 to 1.5 such as from 1.1 to 1.5. The coefficient of the lower layer will thus in the most preferred range have an equal or a higher coefficient of thermal expansion than the upper layer. The method for determining the coefficient of thermal expansion is EN 13746:2005.

According to one embodiment, the compression hardness of the polyolefin ranges from 20 to 150 kPa, for example 40 to 100 kPa (as measured by ISO 3386).

According to one embodiment, the compressive strength of the polyolefin is at least about 30 kPa, such as at least about 40 kPa, e.g. at least about 70 kPa or at least about 100 kPa. The compressive strength may be up to about 200 kPa, or up to about 500 kPa.

According to one embodiment, the hardness of the upper layer, e.g. EPDM layer, is from 30 to 70, preferably 50 to 70, and most preferably from 55 to 65 on the Shore A scale.

According to one embodiment, the hardness of the lower layer ranges from 10 to 100 on the Shore A scale.

According to one embodiment, the fall protection tile or structure is substantially free from any toxic or hazardous compounds or substances, e.g. chlorine and/or fluorine containing phthalates, hydrocarbons, aromatic compounds such as polyaromatics comprised as a separate additive or in any way bound or forming part of a rubber compound or any other compound present such as a polymeric compound. By the expression "free from any toxic or hazardous compounds or substances" is meant less than about 1000 mg/kg, or less than 10 mg/kg, or less than 1 mg/kg or less than 0.1 mg/kg of toxic or hazardous compounds or substances comprised in the fall protection tile or structure.

According to one embodiment, the polyolefin layer comprises one or several layers welded together which correspond to the total thickness of the layer.

According to one embodiment, the layer forming the upper layer preferably comprises rubber-based granules of a thermoset elastomer such as EPDM (ethylene propylene diene monomer), a thermoplastic elastomer, or granules of cork, preferably having a size ranging from 0.5 to 10 mm, such as 1 to 3 mm. Preferably, the thermoset elastomer has a saturated chain, e.g. of the polyethylene type. Preferably the elastomer has a saturated polymer backbone, e.g. such as EPDM.

According to one embodiment, the layer forming the upper layer is substantially free from any mineral particles or fillers including any inorganic components. Components such as mineral particles or fillers may be comprised in an amount of up to 5, preferably up to 1 % by weight. Other components which optionally may be present include paraffinic mineral oil, and crosslinking agents. According to one embodiment, no mineral particles or fillers are comprised.

According to a preferred embodiment, the upper layer is substantially comprised of or consists essentially of EPDM rubber which preferably has been glued together with any suitable amount of glue or binder, such as polyurethane, which may be present in an amount of 1 to 30, for example 5 to 25, or from 10 to 20% by weight of the total weight of the upper layer.

According to a preferred embodiment, the upper layer is formed in a moulding process. The upper layer is preferably formed as plates, preferably provided with beveled edges, at suitable overpressure and heating conditions.

According to one embodiment, any anti-stick means may be employed to prevent sticking of rubber or blend of rubber and adhesive to the mould, for example a silicone-based release agent, a parchment paper, a wax or the like. According to one embodiment, after the formed upper layer has been released from the mould, the silicone layer is removed from the peripheral surface of the upper layer which is to be contacted with the lower layer. The silicone may be removed by means of an emery cloth or sand paper or any other suitable means. After removal of the silicone, an adhesive is applied on the surface where the silicone was removed which preferably corresponds to the contact surface extending from the edges of the side up to 2 cm or up to 5 cm from the sides of the upper layer. Removal of the silicone will improve the bonding between the upper and lower layers.

According to one embodiment, the adhesive is a pressure sensitive hot melt adhesive. According to one embodiment, the pressure applied on the joined upper and lower layers is in the range from 20 to 1000 kPa, preferably from 100 to 600 kPa. The time during which the pressure is applied preferably is from 1 to 240 seconds, for example 60 to 240 seconds or 120 to 240 seconds.

According to one embodiment, the upper layer, e.g. the EPDM pad, which may be up to 10 mm longer and wider than the lower layer, for example 5 to 10 mm longer and wider, is centered on the lower layer, e.g. the XLPE pad. Accordingly, up to 2.5 or 5 mm of the sides of the upper layer will protrude from the adjacent sides of the lower layer. The length and width of the lower and upper layers may also be the same.

According to one embodiment, there is no intermediate layer between the lower layer and the upper layer.

According to one embodiment, the fall protection tile per se comprises no artificial turf grass or geotex layer or any other layer. However, the arrangement may comprise e.g. a layer of a geocomposite for water drainage under the lower layer. Such layer may be composed of for example a continuously thermobonding extruded monofilaments core with a geo textile for separation and filtration. Such geocomposite or geotex layer may be adhered, preferably removably adhered, to the surface of the lower layer of the tile. Such geocomposite layer is thus arranged with one side facing the ground and the other side facing the lower layer to which it may be attached e.g. by means of a self-adhesive tape or other means for adhering the geocomposite to the fall protection structure.

According to one embodiment, the fall protection tile and structure, in particular the upper layer, comprises no styrene butadiene rubber (SBR), extruded polyethylene vinyl acetate sheet or another similar flexible extruded elastomer sheet. It has been noted such materials are not suitable due to insufficient wearing properties. Also, SBR in particular is inappropriate also of reasons associated with its toxicity. According to one embodiment, the fall protection tile and structure comprises no microplastics such as microspheres or other hazardous components. According to one embodiment, the layers as defined according to the invention comprise no further components than as described herein.

According to one embodiment, slits are provided to an extent of about 0.5 to 15, for example 1 to 10, preferably 1 to 5 % of the bulk volume of the lower layer, wherein the term bulk volume means total volume comprised of solid material of the lower layer and the volume made up of the slits.

According to one embodiment, neither of the upper or lower layer is provided with holes, openings, or cavities other than as set out in certain embodiments as described herein, e.g. in the form of slits or possible punched out structures. According to one embodiment, the interlocking lower layer of the tiles have the same shape, for example with one or a plurality of tabs which may be for example rounded tabs. Such tabs may be arranged on opposite ends. Preferably, the lower layer of the tiles has blanks cut into the intervening sides to receive the tabs of adjacent lower layers of the tiles. Other interlocking options are also possible where the lower layer of the tiles may have tabs and blanks variously arranged, and the numbers of tabs and blanks on each tile add up to e.g. four. By means of the tile structure, individual tiles may be swiftly and readily removed from a tile structure comprising a plurality of interlocked tiles by lifting an individual tile vertically from the adjacent tiles. Such operation may be performed e.g. by inserting two thin rod-like tools on opposite sides of a tile and thereafter pulling up the tile. Such tools may have e.g. a hook or angled section at a rear end thereof which when inserted at the edges of a tile assist the pulling up of a tile. The time for mounting and demounting such tile is preferably lower than 0.2 man-hours per tile, most preferably lower than 0.05 man-hours per tile.

### Brief description of the drawings

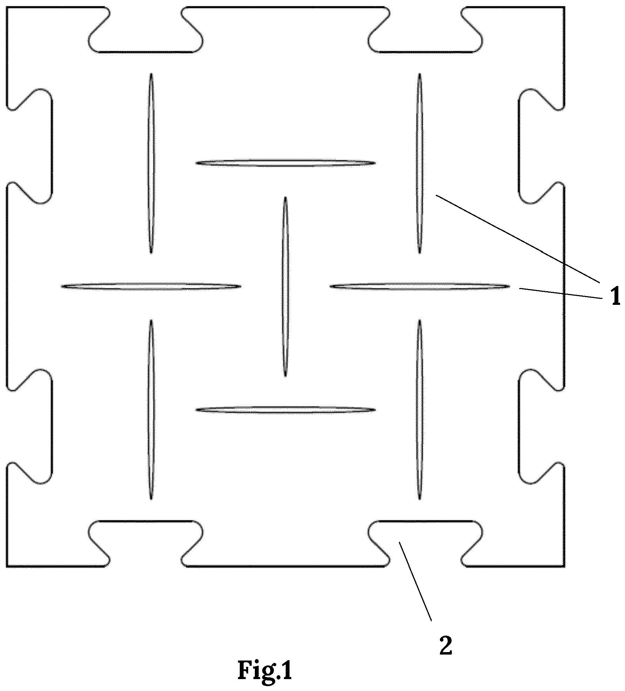

Figure 1 shows an XLPE pad.

### Detailed description of the invention

Figure 1 shows a XLPE pad provided with slits (1) and recesses (2) for locking adjacent XLPE pads with corresponding locking elements in the form of extrusions (not shown) fitting the recesses.

### Example

The lower layer, a foamed XLPE (cross-linked polyethylene) pad having a density of 70 kg/m³ and a tensile strength of about 400 kPa in its lengthwise/crosswise directions, was prepared with dimensions of 10 mm (thickness) x 498 mm (width) x 498 mm (length). Four 10 mm layers of XLPE were then heat welded to one another to provide a 40 mm thick XLPE pad. Slits and portions of hourglass-shaped structures were subsequently punched out as shown in figure 1. The hourglasses may be equipped with a drainage channel of 2-4 mm.

As the XLPE pads with dimensions according to the above are prepared, the punched pads will have recesses 2 (cf. figure 1) or protrusions along their sides enabling mechanical locking with adjacent pads. The exterior portion of the XLPE pads need, however, not be punched. The pads may for example be mechanically attached to adjacent pads as the fall protection structure is mounted. In case a frame surrounds a plurality of pads, means for mechanically fixing adjacent pads may also be omitted.

The upper layer was prepared from granules of EPDM having a diameter ranging from 1 to 3 mm which were mixed with a commercially available polyurethane binder such as Stobielast® S 133.00 in a weight ratio of EPDM to binder ranging from 10 to 20 % by weight to provide an EPDM pad layer with a thickness of 10 mm. Pads with dimensions 10 mm x 500 mm (length) x 500 mm (width) were eventually obtained following a moulding stage. A silicone-based release agent was used to avoid sticking of rubber to the mould while providing lubrication. The silicone was removed by means of sandpaper or emery cloth prior to applying an adhesive on the EPDM layer from the edges of the pad and up to 5 cm from the sides. A pressure sensitive hot melt adhesive such as GluFlex D 2670 was applied on the EPDM layer and allowed to penetrate into the EPDM granules, preferably under heating to a temperature of about 150 to 200 °C depending on the type of adhesive. The adhesive may also be applied on either layer or both on the lower and upper layers of the forming fall protection tiles.

The XLPE and EPDM layers were subsequently contacted to each other by centering the EPDM pad on the XLPE pad. The layered product is subsequently placed in a press for a time in the range of 1 to 240 seconds, typically 240 seconds, and at a pressure ranging from 20 to 1000 kPa. The temperature during the pressing stage was 20 °C.

The joint between the upper and the lower layers, e.g. between EPDM and the XLPE pads of the fall protection tile, which was planar and 50 mm thick, was shown to resist a shear force of at least 10 N during 60 seconds without any occurring deformation.

EN 1177:2018 HIC tests were performed to show the performance of the layered protection tiles. The test was carried out on site. The drop height of 12 separate tests varied from 1.93 to 2.16 m. It turned out the HIC measurements ranged from 574 to 1002. All HIC values obtained were < 1000 except for one test in which the drop height was 2.16 m. All drop heights around 2 meters showed to correspond to a HIC value well below 1000 which proved the layered tile according to the invention protected falls from 2 meters.

## Claims

1. Fall protection tile for playgrounds consisting of
i) an upper layer of granulated rubber selected from non-aromatic thermoset elastomers, non-aromatic thermoplastic elastomers, cork, or combinations thereof, said upper layer having a thickness ranging from 5 to 75 mm; and
ii) a lower layer of a crosslinked foamed polyolefin layer, said lower layer having a thickness ranging from 30 to 150 mm
said upper and lower layers being joined, and wherein the thickness ratio of i) to ii) ranges from 0.03 to 2.5.

2. Fall protection tile according to claim 1, wherein the joint between the upper and lower layers resists a shear force of at least 10 N during 60 seconds without deformation.

3. Fall protection tile according to claim 1 or 2, wherein the granulated rubber in the upper layer is ethylene propylene diene monomer (EPDM).

4. Fall protection tile according to any one of claims 1 to 3, wherein the polyolefin layer is a polyethylene layer.

5. Fall protection tile according to any one of claims 1 to 4, wherein the upper layer is prepared by moulding granulated rubber admixed with an adhesive.

6. Fall protection tile according to any one of claims 1 to 5, wherein the tile has a substantially rectangular or square shape having sides ranging from 200 to 1500 mm.

7. Fall protection tile according to any one of claims 1 to 6, wherein the density of the lower layer ranges from 20 to 220 kg/m³.

8. Fall protection tile according to any one of claims 1 to 7, wherein the lower layer ii) is provided with parallel and perpendicular slits (1) at least about 20 mm from any edges thereof.

9. Fall protection tile according to any one of claims 1 to 8, wherein the length of the slits (1) ranges from 40 to 200 mm and the width of the slits (1) ranges from 2 to 6 mm.

10. Method of manufacturing a fall protection tile according to any one of claims 1 to 9, wherein the upper layer i) and the lower layer ii) are joined by applying an adhesive to at least one contact surface of i) or ii), wherein the adhesive is applied to at least the peripheral portions of at least one of the contacting surfaces; and wherein the layers are pressed together for a time ranging from 1 to 240 seconds at a pressure ranging from 20 to 1000 kPa at a temperature ranging from 10 to 35 °C.

11. Fall protection structure comprising a plurality of tiles according to any one of claims 1 to 10.

12. Fall protection structure according to claim 11, wherein the lower layer of the tiles is
i) shaped to mechanically lock adjacent tiles thereby preventing adjacent tiles to move independently; or
ii) mechanically fixated to adjacent tiles by means of fixing elements.

13. Fall protection arrangement comprising a frame surrounding the peripheral tiles of the fall protection structure according to claim 11 or 12.

14. Fall protection arrangement according to claim 13, wherein a layer iii) for draining water is adhered to the lower layer ii) of claim 1.

15. Use of a fall protection structure or arrangement according to claim 11 to 14 for playgrounds.
